Europäisches Patentamt

European Patent Office

Office européen des brevets

(19)

(11) EP 1 524 791 A2

(12) EUROPEAN PATENT APPLICATION

(43) Date of publication:
20.04.2005 Bulletin 2005/16

(51) Int Cl.⁷: H04L 1/00, H04L 1/16

(21) Application number: 04024670.4

(22) Date of filing: 15.10.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 15.10.2003 KR 2003071955

(71) Applicant: Samsung Electronics Co., Ltd.
Suwon-si, Gyeonggi-do (KR)

(72) Inventors:
• Kim, Youn-Sun, Samsung Electronics Co., Ltd.
Suwon-si, Gyeonggi-do (KR)

• Kwon, Hwan-Joon,
Samsung Electronics Co., Ltd.
Suwon-si, Gyeonggi-do (KR)
• Kim, Dong-Hee, Samsung Electronics Co., Ltd.
Suwon-si, Gyeonggi-do (KR)
• Han, Jin-Kyu, Samsung Electronics Co., Ltd.
Suwon-si, Gyeonggi-do (KR)
• Jung, Jung-Soo, Samsung Electronics Co., Ltd.
Suwon-si, Gyeonggi-do (KR)
• Lee, Su-Yeul, Samsung Electronics Co., Ltd.
Suwon-si, Gyeonggi-do (KR)

(74) Representative: Grünecker, Kinkeldey,
Stockmair & Schwanhäusser Anwaltssozietät
Maximilianstrasse 58
80538 München (DE)

(54) **Method for controlling packet rate in a mobile communication system**

(57) A method for determining a data rate of next reverse packet data according to ACK/NACK information and rate control information received from a plurality of base stations in a mobile communication system, transmits reverse packet data to the base stations, and each of the base stations transmits ACK/NACK information and rate control information, indicating a rate-up, rate-down, or rate-bold command, to the mobile station in response to the reverse packet data. The mobile station determines a data rate of reverse packet data based on rate control information received from a set of base stations that excludes base stations that transmitted rate control information indicating a rate-bold command together with NACK information and transmits the packet data at the determined data rate.

FIG.2

**Description**

**BACKGROUND OF THE INVENTION**

1. Field of the Invention

The present invention relates to a method for controlling a rate in a mobile communication system, and in particular, to a method for controlling a packet rate in a mobile communication system.

2. Description of the Related Art

Code Division Multiple Access (CDMA) mobile communication systems support multimedia services, such as a voice service, and a packet data service using the same frequency band. In the CDMA mobile communication systems, multiple users can simultaneously transmit data using the same frequency band. In the systems, the users are identified through unique codes assigned thereto.

The mobile communication systems can transmit packet data from a base station to a mobile station, and can also transmit packet data from a mobile station to a base station. The direction from the base station to the mobile station is referred to as a "forward" direction, and the direction from the mobile station to the base station is referred to as a "reverse" direction. The packet data can be transmitted in both forward and reverse directions. During forward and reverse data transmission, data is transmitted over a packet data channel by the physical layer packet (PLP). The length of each packet is fixed. However, a data rate of the packets (hereinafter referred to as "packet rate") is variable for each packet, and is scheduled (or controlled) by a base station based on feedback information from the mobile stations, such as information related to power levels and the amount of transmission data of the mobile stations.

A process of determining data rates of mobile stations, which are variable for each packet, is called "scheduling," and the scheduling is performed by a scheduler in a base station. The scheduler performs scheduling by taking into consideration Rise-over-Thermal (RoT) or a load acquired from a received signal-to-noise ratio (SNR) of a mobile station located in the operating area of a current base transceiver station (BTS).

The base station can control reverse data rates of mobile stations using a limited-rate transition scheme. The "limited-rate transition scheme" refers to a scheme in which a base station limits a change in a data rate to one step at a time in controlling reverse data rates of mobile stations.

An example of the limited-rate transition scheme will be described below. It will be assumed that a set of available data rates includes 9.6 Kbps, 19.2 Kbps, 38.4 Kbps, 76.8 Kbps, 153.6 Kbps, and 307.2 Kbps. Further, it will be assumed that a data rate of reverse packet data transmitted by a mobile station at a particular moment in time is 38.4 Kbps. The number and values of the data rates included in the rate set are subject to change according to each system. In the limited-rate transition scheme, a base station limits the transition of a previous data rate to one-step up, one-step down, or current-rate hold in determining the next data rate of a mobile station. For example, the base station limits transition from a current data rate of 76.8 Kbps used by the mobile station to the next data rate, to one of 38.4 Kbps, 76.8 Kbps and 153.6 Kbps.

A description will now be made of the operation of base stations and mobile stations, information transmission, and channels used for the information transmission in the limited-rate transition scheme proposed in a current standard.

When the scheduler of a base station uses the RoT, the scheduler performs scheduling such that the RoT should be adjusted to a reference RoT level. However, when the scheduler of the base station cannot use the RoT, the scheduler performs scheduling such that a load should be adjusted to a reference load level. The base station transmits rate control information (commonly referred to as a "rate control bit (RCB)) to mobile stations according to the scheduling result. The rate control information, or RCB, is transmitted to a particular mobile station over a forward rate control channel (F-RCCH). It should be noted that the name given to the control information and the control channel referred to herein are for example purposes only.

For example, the RCB can be used in the following manner. If an RCB value received from a base station is '+1' (Up), a mobile station increases its data rate by one step for the next transmission duration. If the received RCB value is '-1' (Down), the mobile station decreases its data rate by one step for the next transmission duration. If the received RCB value is '0' (Hold), the mobile station holds at the current data rate for the next transmission duration.

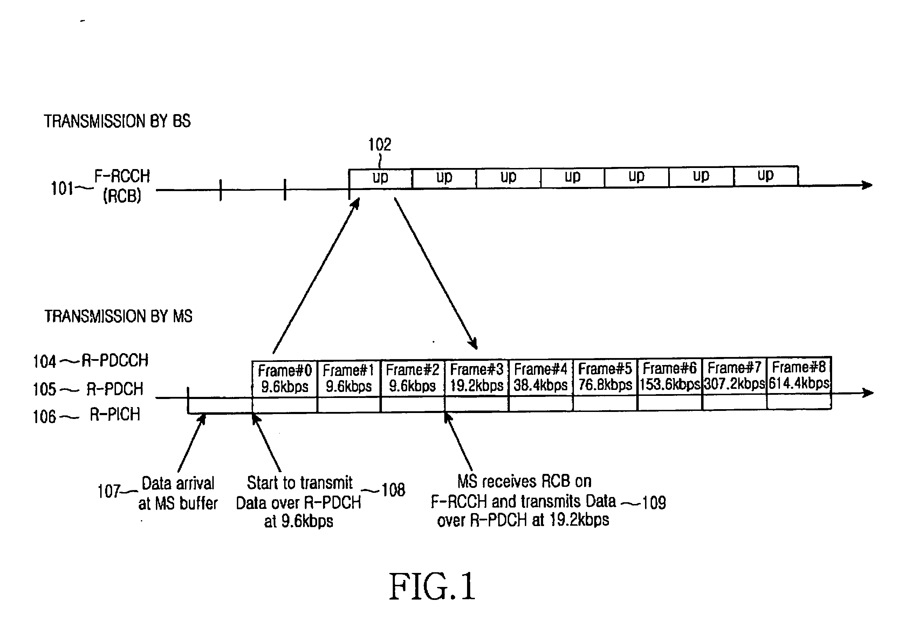

FIG. 1 is a diagram illustrating a process of controlling a data rate of a mobile station in a limited-rate transition scheme. In FIG. 1, RCB is transmitted from a base station (BS) to a mobile station (MS) over a forward rate control channel (F-RCCH) 101. As described above, the RCB is used by a base station to control reverse data rates of mobile stations. A reverse link illustrated in FIG. 1 is comprised of a reverse packet data control channel (R-PDCCH) 104, a reverse packet data channel (R-PDCH) 105, and a reverse pilot channel (R-PICH) 106. The R-PDCCH 104, a control channel transmitted together with the R-PDCH 105, transmits a rate indication sequence (RIS) indicating a rate of data transmitted over the R-PDCH 105, and a mobile status sequence (MSS) that indicates the power and buffer status of a mobile station. The type and the number of bits of information transmitted over the R-PDCCH 104 are variable according to the system configuration. Table 1 illustrates a mapping relation between RISs of the R-PDCCH 104 and data rates of the R-PDCH 105.

Table 1

| R-PDCCH RIS | R-PDCH Data Rate |
|---|---|
| 0000 | 0 Kbps |
| 0001 | 9.6 Kbps |
| 0010 | 19.2 Kbps |
| 0011 | 38.4 Kbps |
| 0100 | 76.8 Kbps |
| 0101 | 153.6 Kbps |
| 0110 | 307.2 Kbps |

As illustrated in Table 1, if the RIS field is set to '0001', the R-PDCH 105 is transmitted at 9.6 Kbps. Also, other sequences are transmitted in the same way. The MSS contains information on a status of a mobile station, and the information is reported to a base station. More specifically, the mobile station generates an MSS indicating whether the mobile station desires to increase, hold or decrease its data rare for the next transmission duration, by taking into consideration the amount of data stored in its buffer and current power level thereof. Thereafter, the mobile station reports the generated MSS to the base station. Here, it should be noted that a data rate of the mobile station is not directly determined based on the report. That is, the base station receiving the reported MSS determines a data rate according to a scheduling result by its scheduler. A detailed description thereof will be given below. Table 2 illustrates examples of the MSS.

Table 2

| MSS | Meaning |
|---|---|
| 00 | Rate-up request by MS |
| 01 | Rate-down report by MS |
| 10 | Rate-hold request by MS |
| 11 | Reserved |

As illustrated in Table 2, if MSS='00', it means that the mobile station desires an increase of its data rate by one step for the next transmission duration. If MSS='01', it means that the mobile station desires a decrease of its data rate by one step for the next transmission duration. Here, it should be noted that unlike the rate-up MSS, the rate-down MSS is not requested but reported by the mobile station. This is because even though the mobile station decreases its data rate without approval of the base station, system performance is not affected. If MSS='10' it means that the mobile station desires to hold at its current data rate for the next transmission duration. MSS='11' is reserved for future use.

A detailed description will now be made of a method for controlling a data rate of a mobile station in the limited-rate transition scheme illustrated in FIG. 1. Referring to FIG. 1, if data to be transmitted to a base station arrives at a buffer of a mobile station at a time 107, the mobile station starts transmitting the data stored in its buffer at the minimum data rate of 9.6 Kbps beginning at a time 108. It will be assumed in a system of FIG 1 that at the minimum data rate of 9.6 Kbps, all mobile stations are allowed to transmit data without permission of the base station. Generally, mobile communication systems are designed such that at the minimum reverse data rate, mobile stations are allowed to transmit data without control of a base station.

It is assumed that at an initial reverse transmission point, i.e., at time 108, the transmission power of the mobile station is sufficiently less than a maximum transmission power limit of the mobile station. At time 108, the mobile station transmits data over R-PDCH 105 at 9.6 Kbps and also transmits RIS and MSS over R-PDCCH 104. Because a data rate of the R-PDCH 105 is 9.6 Kbps, the RIS becomes '0001' as illustrated in Table 1. In addition, because the mobile station can transmit data at a data rate greater than 9.6 Kbps, the MSS becomes '00'.

The base station receiving the R-PDCH 105 and R-PDCCH 104 transmitted for one frame at time 108 performs scheduling. That is, the base station analyzes the MSS ='00' received from the mobile station and determines that the mobile station desires to increase its data rate. Then a scheduler in the base station determines if it can increase a data rate of the mobile station, by taking into consideration the sum (or RoT or total reverse load) of the reverse signals received from other mobile stations except the corresponding mobile station. Herein, the base station determines to increase a data rate of the mobile station as a result of the scheduling, and generates an RCB according to the determination result. At time 102, the base station transmits an RCB for rate increasing to the mobile station over F-RCCH. The mobile station increases its data rate by one step based on the received RCB at time 109. As illustrated in Table 1, the mobile station transmits data at a data rate of 19.2 Kbps which is one step greater than 9.6 Kbps. In this case, RIS on R-PDCCH transmitted together with the R-PDCH at time 109 becomes '0010'.

The base station and the mobile station repeat the foregoing process until the mobile station completely transmits all of the data stored in its buffer. In this process, the mobile station can increase its data rate on a step-by-step basis based on the amount of data stored in its buffer, a maximum power limit-to-current power ratio thereof, and total reverse resource distribution of the base station. After a complete transmission of the data, the mobile station suspends any data transmission. If data transmission by the mobile station is suspended, the R-PDCCH 104 transmits RIS---'0000'.

As described above, the mobile station receives a rate control bit (RCB) transmitted from the base station, and analyzes the received RCB based on Table 3 below.

Table 3

| RCB | Meaning |
|---|---|
| +1 | increasing rate by one step is allowed. |
| 0 | Holding current rate is allowed |
| -1 | Rate should be decreased by one step. |

**SUMMARY OF THE INVENTION**

In the method described above, a mobile station in a handoff state may have the following problem. When the mobile station in a handoff state is rate-controlled by several base stations, it may fail to increase its data rate due to a possible defective RCB received from a base station having a poor channel environment.

It is, therefore, an object of the present invention to provide a method for efficiently analyzing a rate control bit when a mobile station in a handoff state receives rate control bits from several base stations.

It is another object of the present invention to provide by a mobile station a rate control bit analysis method for increasing the entire throughput of a system.

In accordance with one aspect of the present invention, there is provided a method for determining a data rate of a next reverse data packet according to ACK (Acknowledgement)/NACK (Negative Acknowledgement) information and rate control information received from a plurality of base stations in a mobile communication system in which a mobile station located in a soft-handoff region managed by the base stations transmits reverse packet data to the base stations, and each of the base stations transmits ACK/NACK information and rate control information indicating a rate-up, rate-down, or rate-hold command to the mobile station in response to the reverse packet data, the method including the steps of receiving ACK information from at least one of the base stations, receiving either ACK information or NACK information from base stations other than the at least one base station, and receiving rate control information from all of the base stations; and determining a data rate of reverse packet data based on rate control information received from a set of base stations that excludes base stations that transmitted rate control information indicating a rate-hold command together with NACK information.

In accordance with another aspect of the present invention, there is provided a method for determining a data rate of a next reverse data packet according to ACK (Acknowledgement)/NACK (Negative Acknowledgement) information and rate control information received from a plurality of base stations in a mobile communication system in which a mobile station, located in a soft-handoff region managed by the base stations, transmits reverse packet data to the base stations, and each of the base stations transmits ACK/NACK information and rate control information indicating a rate-up, rate-down, or rate-hold command to the mobile station in response to the reverse packet data, the method including the steps of receiving ACK information from at least one of the base stations, receiving either ACK information or NACK information from base stations other than the at least one base station, and receiving rate control information from all of the base stations; and determining a data rate of reverse packet data based on rate control information received from a set of base stations that excludes base stations that transmitted the NACK information.

**BRIEF DESCRIPTION OF THE DRAWINGS**

The above and other objects, features and advantages of the present invention will become more apparent from the following detailed description when taken in conjunction with the accompanying drawings in which:

FIG. 1 is a diagram illustrating a process of controlling a data rate of a mobile station in a limited-rate transition scheme.
FIG. 2 is a flowchart illustrating a method for determining a reverse data rate in a mobile station during handoff according to an embodiment of the present invention.

**DETAILED DESCRIPTION OF THE PREFERRED EMBODIMENT**

Preferred embodiments of the present invention will now be described in detail with reference to the annexed drawings. In the following description, a detailed description of known functions and configurations incorporated herein has been omitted for conciseness.

In a rate control information analysis method proposed by the present invention, a mobile station determines that a rate-hold command is valid only when it receives an ACK response signal from a corresponding base station. However, when the mobile station receives a NACK response signal, it determines that a rate-hold command received from the base station is invalid. The ACK (Acknowledgement)/NACK (Negative Acknowledgement) is an information bit indicating if a base station has succeeded or failed in receiving packet data transmitted by a mobile station, and is transmitted from the base station to the mobile station. That is, if a base station has succeeded in receiving the packet data transmitted by a mobile station, the base station transmits an ACK response signal to the mobile station. In contrast, if a base station has failed to receive the packet data transmitted by a mobile station, the base station transmits a NACK response signal to the mobile station. In the present invention, a mobile station analyzes the rate control information (or rate control bit (RCB)) according to the ACK or the NACK transmitted by a base station.

Rate control information analysis methods according to first and second embodiments of the present invention are based on Table 4 and Table 5, respectively.

Table 4

| Received ACK/NACK bit | Received RCB | RCB analysis by MS |
|---|---|---|
| ACK | UP (+1) | Increasing rate by one step is allowed |
| ACK | DOWN (-1) | Rate should be decreased by one step. |
| ACK | HOLD (0) | Holding current rate is allowed. |
| NACK | UP (+) | Increasing rate by one step is allowed. |
| NACK | DOWN (-1) | Rate should be decreased by one step. |
| NACK | HOLD (0) | Rate control information is disregarded |

Referring to Table 4, if the received rate control information is +1 (UP) or -1 (DOWN), a mobile station always complies with the received rate control information, determining that it is a valid control information. If the received rate control information is 0 (HOLD), the mobile station also determines that the received rate control information is valid, but only when the rate control information is received together with an ACK.

Table 5

| Received ACK/NACK bit | Received RCB | RCB analysis by MS |
|---|---|---|
| ACK | UP (+1) | Increasing rate by one step is allowed |
| ACK | DOWN (-1) | Rate should be decreased by one step. |
| ACK | HOLD (0) | Holding current rate is allowed. |
| NACK | UP (+) | Rate control information is disregarded. |
| NACK | DOWN (-1) | Rate control information is disregarded. |
| NACK | HOLD (0) | Rate control information is disregarded. |

Referring to Table 5, only when the rate control information is received together with an ACK does a mobile station comply with the received rate control information. However, when the rate control information is received together with an NACK, the mobile station disregards the received rate control information, determining that it is invalid.

A method for analyzing rate control information by a mobile station in a soft-handoff state according to a first embodiment of the present invention will be described herein below. In the first embodiment, it is assumed that in the soft-handoff state, there are only two base stations: one is a serving base station and another is a target base station. Actually, however, the number of base stations performing handoff can be greater than 2. In the following description, the base stations will be classified into a first base station and a second base station, rather than a serving base station and a target base station.

A description will first be made of the first embodiment. A mobile station transmits reverse packet data to a first base station and a second base station, and then waits for response signals and RCBs to be received from the base stations. In a specific case, an ACK signal and an RCB=UP(+1) are received from the first base station in response to reverse packet data transmitted thereto, and a NACK signal and an RCB=UP(+1) or RCB=DOWN(-1) are received from the second base station in response to reverse packet data transmitted thereto. That is, the reverse packet data is correctly transmitted to the first base station and the first base station can allow the mobile station to increase its data rate. In this case, if an RCB received from the second base station is UP(+) (RCB=UP(+)), the mobile station increases its data rate by one step, and if an RCB received from the second base station is DOWN(-1) (RCB=DOWN(-1)), the mobile station decrease its data rate by one step. This means that the mobile station can control its data rate according to a situation of the second base station.

In the first embodiment of the present invention, when an ACK signal and an RCB=UP(+1) arc received from the first base station and a NACK signal and an RCB =HOLD(0) arc received from the second base station, the mobile station disregards the RCB=HOLD(0) from the second base station and increases its data rate according to the RCB=UP(+1) from the first base station. In other cases, if an ACK signal and an RCB=DOWN(-1) are received from the first base station and a NACK signal and an RCB=HOLD(0) are received from the second base station, the mobile station disregards the RCB=HOLD(0) from the second base station and decreases its data rate according to the RCB=DOWN(-1) from the first base station.

The mobile station receiving an ACK signal and an RCB=HOLD(0) from the first base station holds its data rate if a NACK signal and an RCB=UP(+1) are received from the second base station; decreases its data rate by one step if a NACK signal and an RCB=DOWN(-1) arc received from the second base station; and holds its data rate if a NACK signal and an RCB=HOLD(0) are received from the second base station. The method for analyzing rate control information from different base stations by a mobile station in a handoff state according to the first embodiment of the present invention is summarized in Table 6.

Table 6

| First BS | | Second BS | | RCB Analysis by MS |
|---|---|---|---|---|
| ACK/NACK | Rate Command | ACK/NACK | Rate Command | |
| ACK | UP(+1) | NACK | Up(+1) | Increasing rate by one step is allowed |
| ACK | UP(+1) | NACK | DOWN(-1) | Rate should be decreased by one step. |
| ACK | UP(+1) | NACK | HOLD(0) | Increasing rate by one step is allowed. |
| ACK | DOWN(-1) | NACK | UP(+) DOWN(-1) HOLD(0) | Rate should be decreased by one step. |
| ACK | HOLD(0) | NACK | Up(+1) | Holding current rate is allowed. |
| ACK | HOLD(0) | NACK | DOWN(-1) Rate | should be step. decreased by one step. |
| ACK | HOLD( | NACK | HOLD(0) | Holding current rate is allowed. |

A description will now be made of a method for analyzing rate control information by a mobile station in a soft-handoff state according to a second embodiment of the present invention.

In the second embodiment of the present invention, if a NACK signal is received from a second base station, a mobile station controls its data rate according to an RCB signal received from the first base station regardless of an RCB signal received from the second base station. Therefore, in the case where the first base station is regarded as a primary serving base station (or sector) and the second base station is regarded as a secondary serving base station (or sector), if a NACK signal is received from the second base station, the mobile station disregards the NACK signal and controls its data rate according to an ACK signal and an RCB signal received from the first base station.

Therefore, the mobile station increases its data rate by one step if an ACK signal and an RCB=UP(+1) are received from the first base station; holds its data rate if an ACK signal and an RCB=HOLD(0) are received from the first base station; and decreases its data rate if an ACK signal and an RCB=DOWN(-1) are received from the first base station. The method for analyzing rate control information from different base stations by a mobile station in a handoff state according to the second embodiment of the present invention is summarized in Table 7.

Table 7

| First BS | | Second BS | | RCB Analysis by MS |
|---|---|---|---|---|
| ACK/NACK | Rate Command | ACK/NACK | Rate Command | |
| ACK | UP(+1) | NACK | UP(+1) DOWN(-1) HOLD(0) | increasing rate by one step is allowed. |
| ACK | DOWN(-1) | NACK | UP(+1) DOWN(-1) HOLD(0) | Rate should be decreased by one step. |
| ACK | HOLD(0) | NACK | UP(+1) DOWN(-1) HOLD(0) | Holding current rate is allowed. |

In Table 7, the case where ACK signals are received from both of the two base stations are not taken into consideration. This is because when the ACK signals are received from all of the base stations participating in a handoff operation, the rate control information is analyzed in the conventional method. Although the present invention has been described with reference to the case where a mobile station performs the handoff between the two base stations, the present invention can also be applied to the case where a mobile station performs the handoff between three or more base stations. Also, the mobile station can control its data rate according to a rate command received in a forward direction regardless of whether a received response signal is an ACK or a NACK signal.

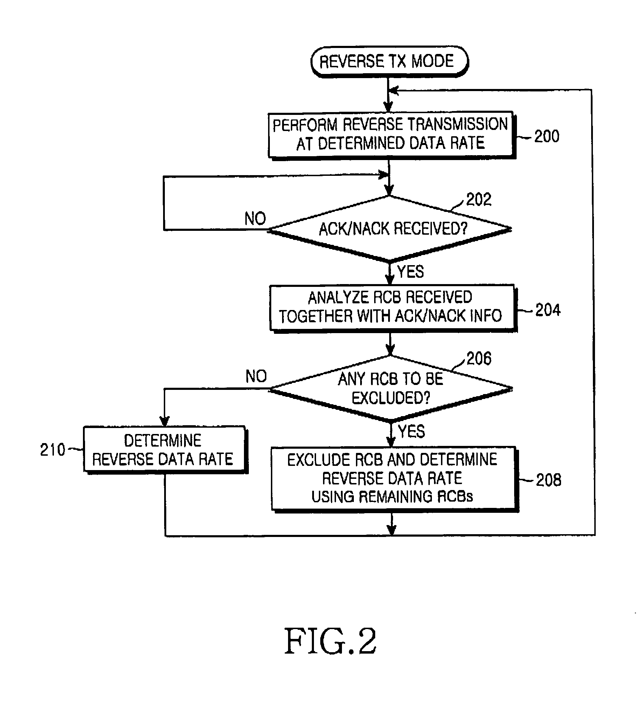

FIG. 2 is a flowchart illustrating a method for determining a reverse data rate in a mobile station during handoff according to an embodiment of the present invention.

In step 200, the mobile station in a reverse transmission mode performs reverse transmission at a determined data rate. In the case of initial transmission, the determined data rate can be a data rate previously determined between a base station and the mobile station. However, in the case of non-initial transmission, the determined data rate can be a data rate determined at a previous slot. After performing the reverse transmission in this way, the mobile station proceeds to step 202 where it receives ACK or NACK signals from a plurality of base stations. As the mobile station is performing bandoff, it receives ACK or NACK signals from all base stations participating in the handoff. As described above, the mobile station receives an RCB together with the ACK or NACK signals. That is, in step 202, the mobile station determines whether ACK or NACK signals arc received from all base stations. If it is determined that the ACK or NACK signals are received, the mobile station proceeds to step 204 where it analyzes an RCB received together with the ACK or NACK signal. Such analysis is made to determine whether there is any RCB to be excluded as described in the two embodiments given herein. That is, in the case of the first embodiment, the analysis is made to determine whether an RCB indicating a rate-hold command was transmitted together with NACK. In the case of the second embodiment, the analysis is made to determine whether there is any base station that transmitted NACK.

Thereafter, in step 206, the mobile station determines whether there is any RCB to be excluded among the received RCBs. In the case of the first embodiment, the process of step 206 is equivalent to a process of determining whether there is any base station that transmitted an RCB indicating a rate-hold command together with the NACK. In the case of the second embodiment, the process of step 206 is equivalent to a process of determining whether there is any base station that transmitted NACK. If it is determined in step 206 that there is any RCB to be excluded, the mobile station proceeds to step 208 where it excludes the corresponding RCB and determines a reverse data rate using the remaining RCBs. However, if it is determined in step 206 that there is no RCB to be excluded, the mobile station proceeds to step 210 where it determines a reverse data rate using RCBs received from all base stations participating in the handoff.

As can be understood from the foregoing description, by transmitting the reverse packet data in the above-described manner during a handoff, it is possible to increase efficiency and throughput of the system.

While the invention has been shown and described with reference to a certain preferred embodiment thereof, it will be understood by those skilled in the art that various changes in form and details may be made therein without departing from the spirit and scope of the invention as defined by the appended claims.

**EP 1 524 791 A2**

**Claims**

1.  A method for determining a data rate of next reverse packet data according to ACK (Acknowledgement)/NACK (Negative Acknowledgement) information and rate control information received from a plurality of base stations in a mobile communication system in which a mobile station, the method comprising the steps of:

    (a) determining a data rate of reverse packet data based on rate control information received from a set of base stations that excludes base station that transmitted rate control information indicating a rate-hold command together with NACK information; and
    (b) transmitting a packet data at determined data rate.

2.  The method of claim 1, further comprising step of receiving ACK information from at least one of the base stations and receiving NACK information from at least one base station other than the at least one base station, and receiving rate control information from all of the base stations

3.  The method of claim 1, wherein the step (a) comprises the step of decreasing a data rate of reverse packet data by one step from a current data rate, if there is any rate-down command in the rate control information received from the set of base stations.

4.  The method of claim 1, wherein the step (a) comprises the step of holding a current data rate of reverse packet data, if there is no rate-down command and there is any rate-hold command in the rate control information received from the set of base stations.

5.  The method of claim 1, wherein the step (a) comprises the step of increasing a data rate of reverse packet data by one step from a current data rate, if there is a rate-up command in each of the rate control information received from the set of base stations.

6.  A method for determining a data rate of next reverse packet data according to ACK (Acknowledgement)/NACK (Negative Acknowledgement) information and rate control information received from a plurality of base stations in a mobile communication system in which a mobile station, located in a soft-handoff region managed by the base stations, the method comprising the steps of:

    (a) determining a data rate of reverse packet data based on rate control information received from a set of base stations that excludes base station that transmitted the NACK information; and
    (b) transmitting a packet data at determined data rate.

7.  The method of claim 6, further comprising step of receiving ACK information from at least one of the base stations, receiving either ACK information or NACK information from at least one base station other than the at least one based station, and receiving rate control information from all of the base stations.

8.  The method of claim 6, wherein the step (a) comprises the step of decreasing a data rate of reverse packet data by one step from a current data rate, if there is any rate-down command in the rate control information received from the set of base stations.

9.  The method of claim 5, wherein the step (a) comprises the step of holding a current data rate of reverse packet data, if there is no rate-down command and there is any rate-hold command in the rate control information received from the set of base stations.

10. The method of claim 5, wherein the step (a) comprises the step of increasing a data rate of reverse packet data by one step from a current data rate, if there is a rate-up command in each of the rate control information received from the set of base stations.

TRANSMISSION BY BS

101 — F-RCCH
(RCB)

102

| up | up | up | up | up | up | up |

TRANSMISSION BY MS

104 — R-PDCCH
105 — R-PDCH
106 — R-PICH

| Frame#0 9.6kbps | Frame#1 9.6kbps | Frame#2 9.6kbps | Frame#3 19.2kbps | Frame#4 38.4kbps | Frame#5 76.8kbps | Frame#6 153.6kbps | Frame#7 307.2kbps | Frame#8 614.4kbps |

107 — Data arrival at MS buffer

Start to transmit Data over R-PDCH at 9.6kbps —108

MS receives RCB on F-RCCH and transmits Data —109 over R-PDCH at 19.2kbps

FIG.1

EP 1 524 791 A2

```
                    ( REVERSE TX MODE )
                            │
                            ▼
              ┌──────────────────────────────┐
              │ PERFORM REVERSE TRANSMISSION  │─── 200
              │    AT DETERMINED DATA RATE    │
              └──────────────────────────────┘
                            │
                            ▼
                          202
        NO           ◇ ACK/NACK RECEIVED? ◇
     ◄──────────
                            │ YES
                            ▼
              ┌──────────────────────────────┐
              │     ANALYZE RCB RECEIVED      │─── 204
              │  TOGETHER WITH ACK/NACK INFO  │
              └──────────────────────────────┘
                            │
                            ▼
                          206
        NO           ◇  ANY RCB TO BE  ◇
     ◄──────────      ◇   EXCLUDED?    ◇
                            │ YES
                            ▼
  ┌──────────────┐   ┌──────────────────────────────┐
  │  DETERMINE   │   │   EXCLUDE RCB AND DETERMINE   │
  │REVERSE DATA  │   │        REVERSE DATA RATE      │─── 208
  │    RATE      │   │      USING REMAINING RCBs     │
  └──────────────┘   └──────────────────────────────┘
      210
```

# FIG.2